# EUROPEAN PATENT SPECIFICATION

(11) **EP 0 999 399 B1**
(45) Date of publication and mention of the grant of the patent: **03.12.2003**
(21) Application number: 99308261.9
(22) Date of filing: 20.10.1999
(51) Int. Cl.: F16L 39/04

(54) **Multi-swivel connector for connecting a fluid operated tool to a source of fluid**
Mehrwegedrehkupplung zum Verbinden von einem druckmittelbetriebenen Werkzeug an eine Fluidquelle
Raccord rotatif multiple pour la connexion d'un outil actionné par fluide avec une source de fluide

(30) Priority: 06.11.1998 US 187838
(43) Date of publication of application: 10.05.2000
(73) Proprietor: Unex Corporation, Mahwah, New Jersey 07430 (US)
(72) Inventor: Wang, Yong, Ridgewood NJ 07450 (US)
(74) Representative: Newby, Martin John

(56) References cited:
- DE-A- 3 632 677
- US-A- 3 175 849
- US-A- 4 683 912

## Description

This invention relates to a multi-swivel connector for connecting a fluid operated tool to a source of fluid, for example to hoses extending from a fluid source, the connector being of the kind comprising a post having a first axis, and swivel means having a second axis extending perpendicular to said first axis, at least one fluid line entering the post at one end of the post and exiting said swivel means.

A multi-swivel connector of the kind referred to is disclosed in US-A-3,175,849. Another known swivel connector is disclosed in US-A-5,311,796. There are applications where a swivel post turns around a cylinder housing. Since the diameter of the cylinder housing can be rather large, turning of the swivel post is made difficult by friction created by seals. As the usual 360-degree rotation might however not be enough to avoid hose kinking, a problem that can delay finishing the job by up to 30 minutes, a dual directional swivel of small dimensions is desirable. As the tool needs to be kept small especially for pocket and other limited clearance applications, it is desirable to design a hose swivel connector so that it is small in its contour, yet allows the hose to be moved not just 360° about one axis, but also at least 180° about a perpendicular axis. This in turn permits the operator to get the hoses out of the way of any obstacle, even in the most confined areas.

Accordingly, it is an object of present invention to provide a multi-swivel connector, for connecting a fluid-operated tool to a fluid source, which avoids the disadvantages of the prior art.

In keeping with these objects and with others which will become apparent hereinafter, there is provided according to the present invention a multi-swivel connector as claimed in the ensuing claim 1.

When the multi-swivel connector is designed in accordance with the present invention, it avoids the disadvantages of the prior art and provides for the above-mentioned highly advantageous results.

The novel features which are considered as characteristic for the present invention are set forth in particular in the appended claims.

An embodiment of the invention will now be described, by way of example only, with particular reference to the accompanying drawings, in which:
Figure 1 is a cross-sectional view of one embodiment of a multi-swivel connector according to the invention for connecting a fluid-operated tool with a source of fluid;
Figure 2, 3 and 4 are a sectional view, a side view, and an end view, respectively, of a post of the multi-swivel connector shown in Figure 1;
Figures 5, 6 and 7 are a sectional view, a side view and an end view, respectively, of a swivel element of the multi-swivel connector shown in Figure 1;
Figures 8, 9 and 10 are a side view, a top view and a sectional view, respectively, of a fitting element of the multi-swivel connector show in Figure 1;
Figure 11 is a sectional view of another embodiment of a multi-swivel connector in accordance with the present invention; and
Figure 12 is a sectional view of a still further embodiment of a multi-swivel connector in accordance with the present invention.

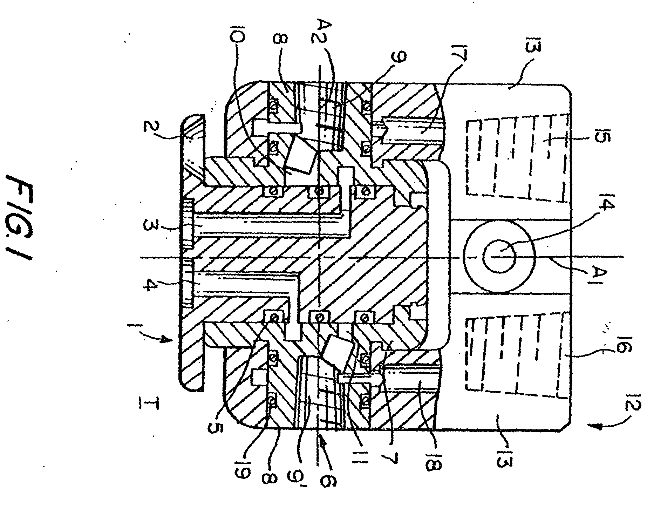

A first embodiment of a multi-swivel connector for connecting a fluid-operated tool to a fluid source with the use of hoses is shown in Figure 1. The connector has a post, generally designated by the reference numeral 1, which is fixedly connectable to a fluid operated tool T, for example with the use of balls extending through holes 2 of a flange. As can be seen in Figure 1, the post has a vertical axis A₁ and has a main part which extends vertically upwardly from the flange. Passages 3 and 4 extend upwardly from a lower end of the post 1 and have upper portions extending at different heights perpendicularly to the axis A₁ to an outer peripheral surface of the post. The post 1 has a plurality of circular grooves 5 in which sealing elements are accommodated.

The connector further includes swivel means, generally designated by the reference numeral 6, having a central collar 7, which is mounted on the body of the post 1 for turning about the axis A₁, and two extensions 8 extending radially in two opposite directions from the axis A₁ along an axis A₂ of the swivel means. The swivel means 6 has a chamber 9 which, at one side of the axis A₁, communicates via an inclined intermediate passage with an annular groove 10 which, in turn, communicates with the transverse portion of the passage 4 of the post 1. The swivel means also has a chamber 9' which, at the opposite side of the axis A₁, communicates via an inclined intermediate passage with an annular groove 11 which in turn communicates with the transverse portion of the passage 3 of the post 1.

The connector also has fitting means, generally designated by the reference numeral 12, having two fitting elements 13 which are connected with one another by a screw extending through an opening 14. Each fitting element 13 has an inlet hole 15, 16 which is formed as a threaded hole to enable an end of a hose extending from a fluid source to be screw connected thereto. The holes 15,16 communicate with-the chambers 9, of the swivel element 6 through passages 17, 18, respectively. The fitting means 12 are turnably arranged on the swivel means 6 for turning about an axis A₂ over an angle of at least 180° and are sealed relative to the swivel means 6 by sealing elements located in grooves 19.

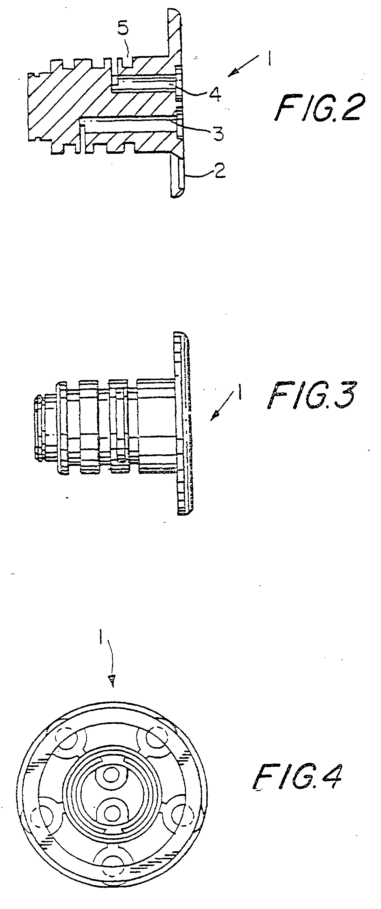

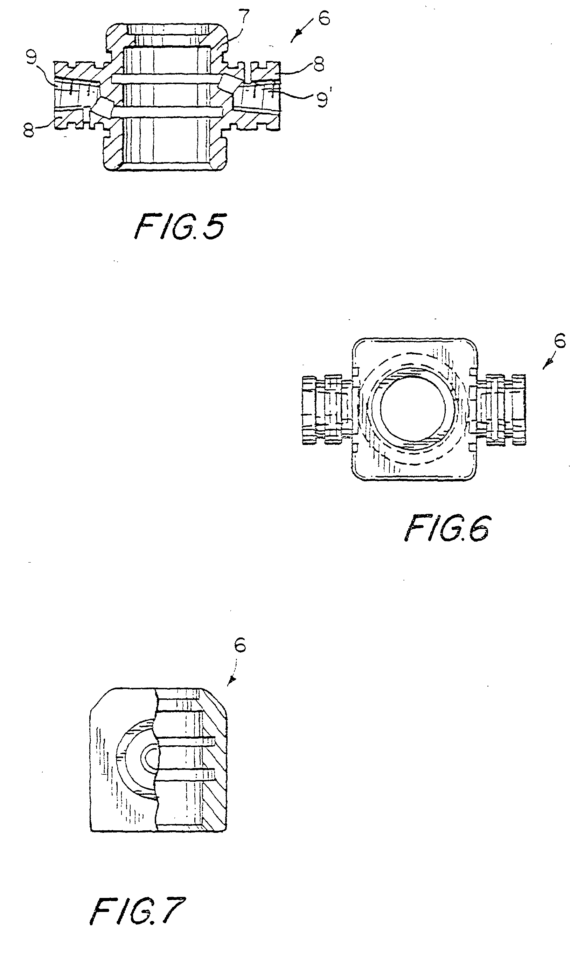

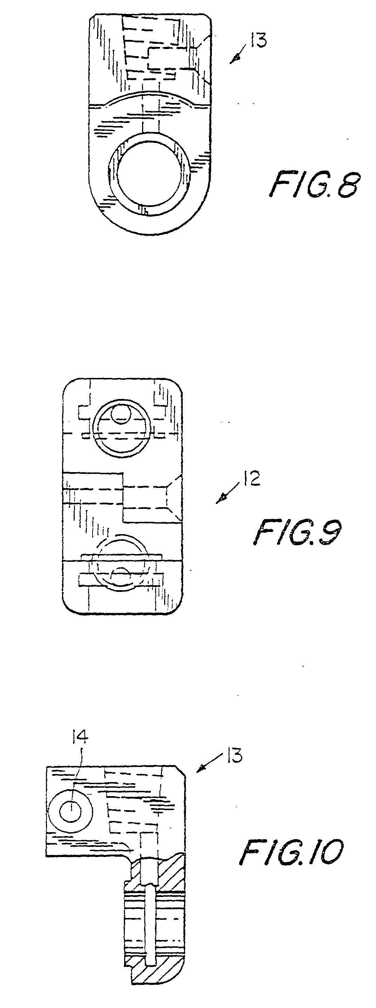

The multi-swivel connector shown in Figures 1-10 operates in the following manner.

When it is necessary to operate a fluid-operated tool (not shown) having, for example, a fluid-operated cylinder-piston unit which drives a tool element with the piston reciprocatingly movable in the cylinder, a fluid is supplied from a fluid source (not shown) through a hose (not shown) into the cylinder at one side of the piston for performing a forward stroke through the passages 15, 17, 9 and 4. For a reverse stroke the fluid can be drained from one side of the piston and admitted to the opposite side of the piston and supplied into the cylinder at the opposite side of the piston through the passages 16, 18, 9' and 3.

During operation the multi-swivel connector allows the fluid-operated tool to move with a substantial degree of freedom since the swivel means 6 is turnable about the axis A₁ of the post, for example the swivel means can be rotated through an angle of more than 360°, while the fitting means 12 is turnable relative to the swivel means about the axis A₂ through at least 180°.

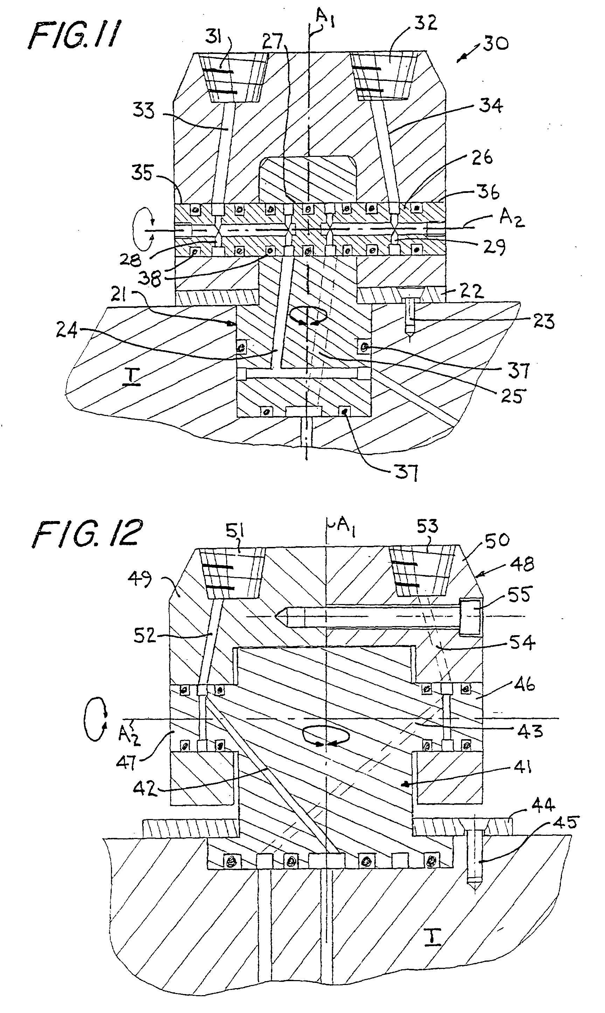

Figure 11 shows another embodiment of a multi-swivel connector in accordance with the present invention. In this embodiment the post 21 is connected to the tool T so that the post is turnable about an axis A₁ of the post and is retained on the tool by a washer 22 which is fixed to the tool by screws 23. A first passage 24 extends from an annular groove which is formed in the post 21 and communicates with a passage provided in the tool, while a second passage 25 formed in the post 21 communicates with a central passage of the tool.

The connector further has swivel means, generally designated by the reference numeral 26, formed as a shaft having annular cut-outs at spaced apart regions along its length. The swivel means 26 is formed as an element which is separate from the post 21 and extends through a central opening 27 of the post. The swivel means 26 has a passage 28 communicating with the passage 24 of the post 21 and a passage 29 communicating with the passage 25 of the post 21. The passages 28 and 29 extend generally parallel to the axis A₂ of the swivel means 26.

The tool further has fitting means, generally designated by the reference numeral 30, having two openings 31 and 32 which can be formed as threaded openings for screw connection of the ends of hoses (not shown) extending from the fluid source. The fitting means 30 is formed as an integral element provided with a passage 33, which communicates the hole 31 with the passage 28 of the swivel means 26, and a passage 34, which communicates the hole 32 with the passage 29 of the swivel means. The fitting means 30 further has two aligned transverse openings 35 and 36 which are in alignment with the central opening 27 of the post 21.

The swivel means 26 is insertable into, and removable from, the aligned openings 27, 35 and 36. Sealing elements 37 seal the post 21 relative to the tool T and sealing elements 38 seal the swivel means 26 relative to the fitting means 30.

The multi-swivel connector shown in Figure 11 operates substantially in the same manner as the multi-swivel connector of Figure 1 with the main difference being that in the multi-swivel connector of Figure 11 the post 21 is turnable about its axis A₁ relative to the tool T and the swivel element 26 is axially insertable and withdrawable through the aligned openings of the post 21 and the fitting means 30. The fitting means 30 in this embodiment is also turnable through an angle more than 360° about the axis A₁, and is turnable through at least 180° about the axis A₂.

In the embodiment of Figure 12, a multi-swivel connector according to the invention has a post, generally designated by the reference numeral 41, having two passages 42 and 43 communicating with corresponding passages of a tool T. The post 41 is mounted so as to be turnable relative to the tool about axis A₁ and to be retained on the tool by a washer 44 which is screwed to the surface of the tool by screws 45. The swivel means in this embodiment is formed of one piece with the post 41 having two extensions 46 and 47 extending in two opposite directions along an axis A₂. The passages 42 and 43 extend through the corresponding extensions as well as through the main body of the post.

The connector further has fitting means 48 comprising two fitting elements 49 and 50. The fitting element 49 has a threaded bore 51 for screw connecting an end of a hose (not shown) extending from the fluid source. The bore 51 communicates with a passage 52 which in turn communicates with the passage 42 of the post 41. The fitting element 50 has a threaded bore 53 for screw connecting an end of a hose (not shown) extending from the fluid source. The bore 53 communicates with a passage 54 which in turn communicates with the passage 43 of the post 41. The fitting elements 49 and 50 are connected together by a bolt 55.

The multi-swivel connector of Figure 12 operates in the same manner as the multi-swivel connectors of Figures 1 and 11 for supplying the fluid to fluid operated tool and withdrawing the fluid from it. The main differences of the multi-swivel connector of Figure 12 are that here the swivel means 46 is formed in one piece with the post 41 which is turnable about the axis A₁ through an angle of more 360°, while the fitting element 48 is composed of two parts connected to one another and turnable about the axis A₂ through at least 180°.

It will be understood that each of the elements described above, or two or more together, may also find a useful application in other types of constructions differing from the types described above.

## Claims

1. A multi-swivel connector for connecting a fluid-operated tool to a fluid source, comprising a post (1) having a first axis (A₁), and swivel means (6) having a second axis (A₂) extending perpendicular to said first axis, at least one first fluid line (3,4,9,10,9',10') entering the post (1) at one end of the post and exiting said swivel means (6), **characterised in that** the connector further comprises fitting means (12) on said swivel means (6) for connection to a hose or the like, said fitting means (12) being turnable about said first axis (A₁) and tiltable about said second axis (A₂), and having at least one second fluid line (17,18) which extends outwardly from said at least one first fluid line (3,4,9,10,9',10'), so that when the hose or the like is connected to a fluid source and to the fitting means, fluid entering said fitting means is fed to said one end of the post for operating the fluid-operated tool connected to said post.

2. A multi-swivel connector according to claim 1, **characterised in that** said connector has connection means for immovably connecting said post (1) to the fluid operated tool.

3. A multi-swivel connector according to claim 2, **characterised in that** said connection means are adapted to removably connect said post with said fluid operated tool.

4. A multi-swivel connector according to any one of claims 1 to 3, **characterised in that** said swivel means (6) is mounted for turning about said first axis (A₁) relative to said post.

5. A multi-swivel connector according to claim 1, **characterised in that** said connector has connection means for turnably mounting the post (2) to the fluid-operated tool for turning about said first axis (A₁).

6. A multi-swivel connector according to claim 5, **characterised in that** said swivel means is formed of one piece with said post so as to form an integral element turnable about said first axis (A₁) and having a post part (41) and a swivel part (46,47).

7. A multi-swivel connector according to claim 1, **characterised in that** said fitting means comprise two fitting parts (12,13;49,50) which are mounted on said swivel means (7;46,47) and **in that** connection means (14;55) are provided for connecting said fitting parts with one another.

8. A multi-swivel connector according to claim 1, **characterised in that** said swivel means (46,47) is formed of one piece with said post so as to form an integral element, **in that** said fitting means includes two fitting members (49,50) which are mounted on said swivel means (46,47), and **in that** connection means (55) is provided for connecting said fitting members together.

9. A multi-swivel connector according to claim 1, **characterised in that** said post (21) has a throughgoing opening extending along said second axis (A₂), **in that** said fitting means (30) also has a throughgoing opening coinciding with said throughgoing opening of said post (21), and **in that** said swivel means (26) is formed as a member which is inserted into and held in the said throughgoing openings of said post and said fitting means.

## Patentansprüche

1. Mehrfachgelenkverbinder zur Verbindung eines fluidbetätigten Werkzeugs mit einer Fluidquelle, der einen Stab (1) mit einer ersten Achse (A₁) und ein Gelenkmittel (6) mit einer zweiten Achse (A₂), die senkrecht zur ersten Achse verläuft, umfaßt, wobei mindestens eine erste Fluidleitung (3, 4, 9, 10, 9', 10') an einem Ende des Stabs in den Stab (1) eintritt und aus dem Gelenkmittel (6) austritt, **dadurch gekennzeichnet, daß** der Verbinder weiterhin ein Anschlußmittel (12) am Gelenkmittel (6) zur Verbindung mit einem Schlauch oder dergleichen umfaßt, wobei das Anschlußmittel (12) um die erste Achse (A₁) drehbar und um die zweite Achse (A₂) kippbar ist und mindestens eine zweite Fluidleitung (17, 18) hat, die von der mindestens einen ersten Fluidleitung (3, 4, 9, 10, 9', 10') aus nach außen verläuft, so daß, wenn der Schlauch oder dergleichen mit einer Fluidquelle und mit dem Anschlußmittel verbunden ist, in das Anschlußmittel eintretendes Fluid dem einen Ende des Stabs zugeleitet wird, um das mit dem Stab verbundene fluidbetätigte Werkzeug zu betreiben.

2. Mehrfachgelenkverbinder nach Anspruch 1, **dadurch gekennzeichnet, daß** der Verbinder Verbindungsmittel zur unbewegbaren Verbindung des Stabs (1) mit dem fluidbetätigten Werkzeug besitzt.

3. Mehrfachgelenkverbinder nach Anspruch 2, **dadurch gekennzeichnet, daß** die Verbindungsmittel so ausgeführt sind, daß der Stab entfernbar mit dem fluidbetätigten Werkzeug verbunden werden kann.

4. Mehrfachgelenkverbinder nach einem der Ansprüche 1 bis 3, **dadurch gekennzeichnet, daß** das Gelenkmittel (6) für eine Drehung um die erste Achse (A₁) im Verhältnis zum Stab montiert ist.

5. Mehrfachgelenkverbinder nach Anspruch 1, **dadurch gekennzeichnet, daß** der Verbinder Verbindungsmittel für eine drehbare Montage des Stabs (2) am fluidbetätigten Werkzeug zwecks Drehung um die erste Achse (A₁) besitzt.

6. Mehrfachgelenkverbinder nach Anspruch 5, **dadurch gekennzeichnet, daß** das Gelenkmittel mit dem Stab einteilig ausgeführt ist, um ein integrales Element zu bilden, das um die erste Achse (A₁) drehbar ist sowie ein Stabteil (41) und ein Gelenkteil (46, 47) besitzt.

7. Mehrfachgelenkverbinder nach Anspruch 1, **dadurch gekennzeichnet, daß** das Anschlußmittel zwei Anschlußteile (12, 13; 49, 50) umfaßt, die am Gelenkmittel (7; 46, 47) montiert sind, und daß Verbindungsmittel (14; 55) vorgesehen sind, um die Anschlußteile miteinander zu verbinden.

8. Mehrfachgelenkverbinder nach Anspruch 1, **dadurch gekennzeichnet, daß** das Gelenkmittel (46, 47) mit dem Stab einteilig ausgeführt ist, um ein integrales Element zu bilden, daß das Anschlußmittel zwei Anschlußelemente (49, 50) beinhaltet, die am Gelenkmittel (46, 47) montiert sind, und daß das Verbindungsmittel (55) vorgesehen ist, um die Anschlußelemente miteinander zu verbinden.

9. Mehrfachgelenkverbinder nach Anspruch 1, **dadurch gekennzeichnet, daß** der Stab (21) eine durchgehende Öffnung hat, die sich entlang der zweiten Achse (A₂) erstreckt, daß das Anschlußmittel (30) auch eine durchgehende Öffnung hat, die mit der durchgehenden Öffnung des Stabs (21) zusammenfällt, und daß das Gelenkmittel (26) als ein Element ausgebildet ist, das in die durchgehenden Öffnungen des Stabs und des Anschlußmittels eingesetzt ist und darin festgehalten wird.

## Revendications

1. Raccord rotatif multiple pour connecter un outil actionné par un fluide à une source de fluide, comprenant un support (1) présentant un premier axe (A₁), et des moyens de rotation (6) présentant un deuxième axe (A₂) s'étendant perpendiculairement audit premier axe, au moins une première ligne de fluide (3, 4, 9, 10, 9 ' , 10 ' ) pénétrant dans le support (1) à une première extrémité de celui-ci et sortant par lesdits moyens de rotation (6), **caractérisé en ce que** le raccord comprend en outre des moyens de raccordement (12) sur lesdits moyens de rotation (6) pour la connexion à un tuyau ou analogue, lesdits moyens de raccordement (12) pouvant tourner autour dudit premier axe (A₁) et pouvant être inclinés autour dudit deuxième axe (A₂), et comprenant au moins une deuxième ligne de fluide (17, 18) s'étendant vers l'extérieur à partir de ladite au moins une première ligne de fluide (3, 4, 9, 10, 9', 10'), de telle sorte que lorsque le tuyau ou analogue est connecté à une source de fluide et aux moyens de raccordement, le fluide qui pénètre dans lesdits moyens de raccordement soit amené jusqu'à ladite première extrémité du support pour actionner l'outil actionné par un fluide connecté audit support.

2. Raccord rotatif multiple suivant la revendication 1, **caractérisé en ce que** le raccord comprend des moyens de connexion pour connecter d'une façon inamovible ledit support (1) à l'outil actionné par un fluide.

3. Raccord rotatif multiple suivant la revendication 2, **caractérisé en ce que** lesdits moyens de connexion sont aptes à connecter d'une façon amovible ledit support audit outil actionné par un fluide.

4. Raccord rotatif multiple suivant l'une quelconque des revendications 1 à 3, **caractérisé en ce que** lesdits moyens de rotation (6) sont montés de manière à tourner autour dudit premier axe (A₁) par rapport audit support.

5. Raccord rotatif multiple suivant la revendication 1, **caractérisé en ce que** ledit raccord comprend des moyens de connexion permettant de monter d'une façon rotative le support (2) sur l'outil actionné par un fluide hydraulique afin de tourner autour dudit premier axe (A₁).

6. Raccord rotatif multiple suivant la revendication 5, **caractérisé en ce que** lesdits moyens de rotation forment une seule pièce avec ledit support de manière à former un élément intégral pouvant tourner autour dudit premier axe (A1) et comprenant une partie de support (41) et une partie rotative (46, 47).

7. Raccord rotatif multiple suivant la revendication 1, **caractérisé en ce que** lesdits moyens de raccordement comprennent deux parties de raccordement (12, 13 ; 49, 50) montées sur lesdits moyens de rotation (7 ; 46, 47), et **en ce qu'**il est prévu des moyens de connexion (14 ; 55) pour connecter lesdites parties de raccordement l'une à l'autre.

8. Raccord rotatif multiple suivant la revendication 1, **caractérisé en ce que** lesdits moyens de rotation (46, 47) forment une seule pièce avec ledit support de manière à former un élément intégral, **en ce que** lesdits moyens de raccordement comprennent deux éléments de raccordement (49, 50) montés sur lesdits moyens de rotation (46, 47), et **en ce qu'**il est prévu des moyens de connexion (55) pour connecter lesdits éléments de raccordement ensemble.

9. Raccord rotatif multiple suivant la revendication 1, **caractérisé en ce que** ledit support (21) comporte une ouverture passante s'étendant le long dudit deuxième axe (A₂), **en ce que** lesdits moyens de raccordement (30) comportent également une ouverture passante qui coïncide avec ladite ouverture passante dudit support (21), et **en ce que** lesdits moyens de rotation (26) sont formés comme un élément qui est inséré et maintenu dans lesdites ouvertures passantes dudit support et desdits moyens de raccordement.
